# EUROPÄISCHE PATENTSCHRIFT

(11) **EP 0 555 792 B1**
(45) Veröffentlichungstag und Bekanntmachung des Hinweises auf die Patenterteilung: **07.05.1997**
(21) Anmeldenummer: 93101900.4
(22) Anmeldetag: 08.02.1993
(51) Int. Cl.: C05F 5/00

(54) **Verfahren und Vorrichtung zum Herstellen eines Düngemittels aus Traubentrester**
Process and device to produce fertilizer from grape marc
Procédé et dispositif de fabrication d'engrais à partir des marcs de raisins

(30) Priorität: 08.02.1992 DE 4203720
(43) Veröffentlichungstag der Anmeldung: 18.08.1993
(73) Patentinhaber: Asam, Erich, D-83684 Tegernsee (DE)
(72) Erfinder: Asam, Erich, D-83684 Tegernsee (DE)
(74) Vertreter: Sasse, Volker, Dipl.-Ing.

(56) Entgegenhaltungen:
- EP-A- 0 149 702
- DE-A- 2 729 379
- US-A- 3 140 920

## Beschreibung

Die Erfindung betrifft ein Verfahren nach dem Oberbegriff von Anspruch 1 und eine Vorrichtung nach dem Oberbegriff von Anspruch 9.

Im AT-Buch: "Dünger und Energie aus Traubentrester", Herausgeber: Bundesministerium für Wissenschaft und Forschung in Wien, August 1983, S. 54 bis 64, wird ein Prototyp einer Großanlage zur Verarbeitung von Traubentrestern beschrieben, in der zur Verteilung des der Kämme entledigten, von einem Förderband hochgeförderten Traubentrester waagrechte Förderschnecken mehrere Trestersilos individuell beschicken. In den Trestersilos findet eine aerobe Rottung mit Temperaturanstieg statt (2 bis 4 Wochen). Anschließend findet eine Hauptrotte in einer Rottekammer mit mehreren kleinen Zellen statt. Der Zelleninhalt rutscht nach unten in eine erste Nachrottewanne, aus der über eine waagerecht angeordnete Förderschnecke und einen vertikal gerichteten Schneckenelevator eine zweite Nachrottewanne beschickt wird. Die verwendeten Schneckenförderer und der Schneckenelevator erfüllen eine reine Förderfunktion zwischen unterschiedlichen Stationen der Anlage.

Bei einem aus DE-PS 2 729 379 C2 bekannten Verfahren wird der Traubentrester einer aeroben Verrottung unterworfen und dabei in ein- oder mehrwöchigen Abständen mit frischen oder vorübergehend unter anaeroben Verhältnissen gelagertem Traubentrester vermischt, um die mikrobielle Rottung zu verstärken. Dazwischen kann befeuchtet werden. Die so erhaltene Masse wird getrocknet, um die Kerne später absondern zu können, z.B. durch Sieben, ehe sie gemahlen und einer Nachverrottung unterworfen und gegebenenfalls wieder zugemischt werden. Für die Nachverrottung werden Holzbehälter mit Metallstäben oder Gittern oder Streckmetall für die Belüftung und Flüssigkeitsrückführung eingesetzt. Wird Traubentrester mikrobiell gerottet und dabei nur umgeschichtet, gemischt und gelagert, d.h. weitgehend sich selbst und der natürlichen Umwandlung überlassen, ist dafür viel Zeit und Platz nötig. Eine zügige und rentable Verwertung des Traubentresters läßt sich kaum realisieren.

Aus US-PS 3 140 920 ist ein Verfahren zur Herstellung eines Düngemittels bekannt, bei dem Baumrinde eingesetzt wird. Die Baumrinde wird in einer Mühle zu einem Pulver gemahlen, anschließend gesiebt und einer schräg aufwärts gerichteten Schneckenförderung zugeführt. Bei dieser Schneckenförderung wird das Pulver mit Wasser oder einer Pflanzen-Nährflüssigkeit versetzt. Dabei entsteht ein Flüssigdünger für Pflanzen.

Aus der EP-OS 0 149 702 ist ein Verfahren zur aeroben Verrottung von Traubentrester bekannt. Dabei wird der Traubentrester in Alkohol umgewandelt und anschließend einer Veresterung unterworfen. Bei einer Umlagerung zur Erleichterung des Luftzutritts wird die Masse mit Humicola- bzw. Actinomydetensporen versetzt. Diese Sporen bilden ein Myzel, das den Abbau des Traubentresters bewerkstelligt. Nach einem anschließenden Abbau des Pilz-Myzels wird diese Substanz zum Verrotten von Traubenkernen verwendet.

Bei einem aus der DE-PS 3 038 752 C1 bekannten Verfahren wird der Traubentrester einer aeroben Verrottung unterworfen, ehe die Masse zerkleinert wird. Bei einer Ausführungsform des Verfahrens werden die Kerne nach der Verrottung und einer Trocknung ausgesondert und für sich zerkleinert.

Die Mehrzahl der beschriebenen Verfahren erfordert eine entsprechend aufwendige Behandlung des Traubentresters, wobei in den meisten Fällen erheblicher, nicht verwertbarer Abfall anfällt.

Der Erfindung liegt die Aufgabe zugrunde, ein Verfahren der eingangs genannten Art sowie eine zum Durchführen des Verfahrens geeignete Vorrichtung zu schaffen, die eine beschleunigte und damit rentable Verarbeitung in großer Menge anfallenden Traubentresters zu einem Düngemittel oder einem Düngemittel und Rohmaterial für die Ölgewinnung ermöglichen.

Die gestellte Aufgabe wird mit einem Verfahren nach Anspruch 1 und mit der Vorrichtung gemäß Anspruch 9 gelöst. Beim erfindungsgemäßen Verfahren wird der Erkenntnis Rechnung getragen, daß grobe Bestandteile und vor allem die Kerne im Traubentrester durch aerobe und anaerobe Rottung nicht innerhalb eines tragbaren Zeitraumes umwandelbar sind, sondern selbst nach jahrelanger Rottung mit Umschichten, Mischen, Bewässern und Belüften noch weitgehend unangegriffen bleiben. Da jedoch der Traubentrester erfindungsgemäß bei der Schneckenförderung gewollt intensiv mechanisch bearbeitet, also intensiv geschert und gewalkt wird, werden nicht nur die groben Teile zerkleinert, sondern vor allem die Kerne durch das Scheren und Walken bearbeitet und aus der restlichen Masse weitgehend herausgelöst, so daß sie entweder einfach ausgesondert und für sich alleine behandelt oder in der durch die Schneckenförderung mechanisch aufbereiteten Masse nachfolgend rascher umgesetzt werden können als bisher. Das Welken und Scheren des Traubentresters führt zu einer vorteilhaften Konditionierung und mechanischen Aufbereitung sowie einer innigen Durchmischung bei gleichzeitiger Lockerung und günstiger Homogenisierung der Traubentrestermasse, in der die Kerne in losgelöster Form noch vorhanden und gegebenenfalls leicht aussonderbar sind. Ausgesonderte Kerne lassen sich für sich mechanisch zerkleinern und gegebenenfalls wieder zumischen oder auch zur Ölgewinnung nutzen. Es wird durch die Schneckenförderung eine die Umwandlung beschleunigende und der Qualität des Endprodukts außerordentlich zuträgliche Konditionierung, Homogenisierung und Lockerung erreicht.

Die erfindungsgemäße Vorrichtung benutzt eine Schneckenförderstrecke, in der die Förderschnecke in ihrem Förderkanal erheblich mehr als bisher die mit erheblichem Zeit- und Arbeitsaufwand bei der Rottung des Traubentresters durchzuführenden Arbeiten mit sehr gutem Wirkungsgrad und in einem Durchgang übernimmt. In den Scherspalten entlang der Schneckenförderstrecke werden nicht nur die groben Kämme zerkleinert, sondern die eingebackenen Kerne herausgelöst und an ihren harten Oberflächen zumindest zum Teil beschädigt. Zu einer innigen Durchmischung und Lockerung kommt eine weitgehende Homogenisierung der Masse, aus der in weiteren Rottungsprozessen unerwartet rasch Dünger hoher Qualität entsteht. Durch die physikalische Aufbereitung des Traubentresters entlang der Schneckenförderstrecke lassen sich nachfolgende Kernaussonderungs-, Fraktionentrenn- und Trocknungsschritte wirksam, d.h. im Hinblick auf eine rasche Erzeugung des Düngemittels, durchführen. Mit der Vorrichtung lassen sich praktisch unbegrenzte Mengen von Traubentrester relativ rasch und mit vertretbar geringem Aufwand zu hochwertigen Produkten verarbeiten.

Bei der Verfahrensvariante gemäß Anspruch 2 wird das in etwa ein Jahr gerottete Traubentrester-Ausgangsmaterial in einer Zwischenstufe der Schneckenförderung unterworfen und dabei aufbereitet, weitgehend in seine Einzelteile aufgelöst und wirkungsvoll homogenisiert. Bei der einjährigen Rottung findet in einer ca. 40 cm tief reichenden Oberflächenschicht eine aerobe Rottung statt, wobei diese Oberflächenschicht den Kernbereich der Traubentrestermasse abdeckt und dort nur eine aerobe Rottung zuläßt, die bei niedrigen Temperaturen abläuft. Die anaerobe Rottung wird gefördert, indem durch Walzen und/oder Pressen die Milchsäure und Luft ausgetrieben werden, so daß eine störende Geruchsbildung jeweils nach kurzer Zeit aufhört. Nach der anschließenden Schneckenförderung läßt sich das homogenisierte und aufbereitete Zwischenmaterial einfach und mit hohem Durchsatz rasch weiterverarbeiten, z.B. Nachrotten.

Besonders günstig ist der Verfahrensschritt gemäß Anspruch 3, weil sich die freifallende Masse gut lockert und innig durchmischt, was für eine anschließende Rottung besonders vorteilhaft ist.

Eine weitere, zweckmäßige Maßnahme geht aus Anspruch 4 hervor. Durch das Scheren und Walken während der Schneckenförderung wird nachfolgend das Aussondern der resistenten Kerne unerwartet vereinfacht, weil sich diese leicht aus der Masse lösen. Die ausgesonderten Kerne können zur Ölgewinnung benutzt werden.

Bei einer alternativen Verfahrensvariante gemäß Anspruch 5 wird der zusammengebackene, relativ frische Traubentrester bei der Schneckenförderung mechanisch konditioniert und aufbereitet. Die Kerne werden von den Kämmen und den anderen Bestandteilen gelöst. Die Masse wird locker und homogen, so daß nachfolgend einfach Fraktionen gebildet werden können, in denen die einzelnen Bestandteile getrennt vorliegen. Vor dem Trennen wird getrocknet, um z.B. eine Restfeuchte von vorzugsweise 15 % zu erreichen, die auch ein nachfolgendes Lagern ohne zusätzliche Hilfsmaßnahmen ermöglicht. Ohne das hierbei erhaltene Produkt noch nachhaltig nachzurotten, läßt es sich als Bodenverbesserungs-Granulat einsetzen, das den Boden lockert, ihm Nährstoffe und wichtige Mineral- und Metallsubstanzen zuführt und im Boden zu wertvollem Düngemittel nachrottet.

Bei der Verfahrensvariante gemäß Anspruch 6 wird die verbleibende flüssige Biomasse mit Flüssigkeit angesetzt und zum Reifen gebracht, so daß sich ein wirksamer Flüssigdünger oder Flüssig-Bodenverbesserer ohne störende Kernanteile ergibt.

Es hat sich als besonders vorteilhaft erwiesen, das Verfahren mit den Merkmalen des Anspruchs 7 durchzuführen. Die durch das Scheren und Welken mechanisch angegriffenen harten Teile des Traubentresters, insbesondere die Kerne, lassen nach Durchbrechen der harten Außenschale das Wasser ins Innere dringen, so daß sich Energiestoffe in einem Gärprozeß ausschwemmen lassen. Insbesondere erwärmtes Wasser verkürzt den Umsetzungsprozeß, so daß sich in nur 2 bis 4 Tagen ein voll entwickelter Flüssigdünger ergibt. Die ausgelaugten Feststoffe werden einfach herausgefiltert.

Ein weiterer, wichtiger Verfahrensschritt geht aus Anspruch 8 hervor. Normal teuer zu entsorgender Papierschlamm wird nutzbringend eingesetzt, mit dem Traubentrester ein wirksames Düngemittel zu bilden und dabei den pH-Wert zu steuern. Der Papierschlamm wird dabei durch das Scheren und Welken bei der Schneckenförderung mit dem Traubentrester zu einer homogenen Masse vermischt, die der weiteren raschen Rottung oder weiteren Prozeßschritten zuführbar ist.

Die Vorrichtung gemäß Anspruch 9 beansprucht wenig Platz, um bei industrieller Verarbeitung große Mengen von Traubentrester und ggf. auch Papierschlamm aufzuarbeiten. Der Schneckenförderstrecke mit ihrer in den Förderkanal mit ausreichendem Abstand eingepaßten Förderschnecke wird neben der Transportaufgabe vor allem die Aufgabe einer mechanischen Konditionierung des Traubentresters, nämlich das Welken, das Scheren und die intensive Durchmischung während der Förderung zugewiesen.

Wichtig ist ferner die Ausführungsform von Anspruch 10, weil der schräge Anstieg der Schneckenförderstrecke einen günstigen Gegendruck in der Masse erzeugt, durch den die Bestandteile insbesondere beim Welken und Scheren wirkungsvoll vermischt, homogenisiert und bearbeitet werden. Der Anstieg der Schneckenförderschnecke schafft darunterliegenden Platz zum Abfüllen des gewonnenen Produkts, wobei hierfür Schwerkraft nutzbar ist, um nochmals zu belüften und zu mischen.

Der Traubentrester wird gemäß Anspruch 11 intensiv aufbereitet, weil zwischen den Sektionen der Schneckenförderstrecke in der Freifallstrecke eine Belüftung, weitere Mischung und Lockerung der Masse stattfindet, was für die weitere Konditionierung in der nachfolgenden Schneckenförderstrecken-Sektion günstig ist. Außerdem wird für die Schneckenförderstrecke die Bauhöhe reduziert. Eine Freifallhöhe von ca. 1 m hat sich als ausreichend erwiesen.

Besonders wichtig ist die Maßnahme von Anspruch 12, weil die Drallspur einerseits bei der Förderung behilflich ist, andererseits aber die mechanische Bearbeitung des Traubentresters intensiviert, damit sich die gewünschte Vermischung, Aufbereitung und Homogenisierung ergeben.

Bei der Ausführungsform gemäß Anspruch 13 wird in der Freifallstrecke ein Kernanteil ausgesondert, und zwar mittels eines Siebes, einer Blasvorrichtung oder einer Ausschwemmvorrichtung. Die verbleibende Masse ist weitgehend kernfrei und wandelt sich schnell zu einem brauchbaren Düngemittel (Partikeldünger oder Flüssigdünger) um. Alternativ kann die Kernfraktion auch am Ende der Schneckenförderstrecke abgesondert werden.

Bei der Ausführungsform gemäß Anspruch 14 läßt sich entweder nur die Kernfraktion oder die gesamte Masse so zerkleinern, daß mit einer relativ kurzen aeroben Rottung ein Düngemittel hoher Qualität entsteht, in dem keine ganzen Kerne mehr vorliegen. Beim Zerkleinern, das beispielsweise mit einem Klutenbrecher oder einer Spezialmühle erfolgt, werden größere Kernbestandteile oder Blattbestandteile bzw. Schalenbestandteile so zerkleinert, daß sie für eine wirksame Nachrottung wichtige kleine Teilchen mit großer Oberfläche bilden.

Bei einer alternativen Ausführungsform gemäß Anspruch 15 ist eine Fraktions-Trennvorrichtung vorhanden.

Besonders zweckmäßig läßt sich die Trennung gemäß Anspruch 16 durchführen, wobei aufeinanderfolgend getrocknet und getrennt wird. Zweckmäßigerweise wird ein Lufttrockner, ein Warmluft-Trommel- oder Flächentrockner oder ein Durchlauftrockner verwendet, um bei kurzer Trocknungszeit eine hohe Trocknungsleistung zu erzielen.

Eine zweckmäßige Ausführungsform, die zur industriellen Verarbeitung von Traubentrester geeignet ist, geht aus Anspruch 17 hervor. Auf kleiner Bodenfläche durchläuft der Traubentrester die einzelnen Sektionen der Vorrichtung, wobei er mehrfach nach oben gefördert und wieder herabfallen gelassen wird.

Anhand der Zeichnung werden Ausführungsformen des Erfindungsgegenstandes erläutert.

Es zeigt:
- Figur 1: schematisch eine Vorrichtung zum Verarbeiten von Traubentrester,
- Figur 2: schematisch den Endteil einer abgewandelten Ausführungsform der Vorrichtung,
- Figur 3: schematisch den Endteil einer weiter abgewandelten Ausführungsform der Vorrichtung,
- Figur 4: eine weitere schematische Abwandlung der Vorrichtung und
- Figur 5: eine konkrete Ausführungsform der Vorrichtung.

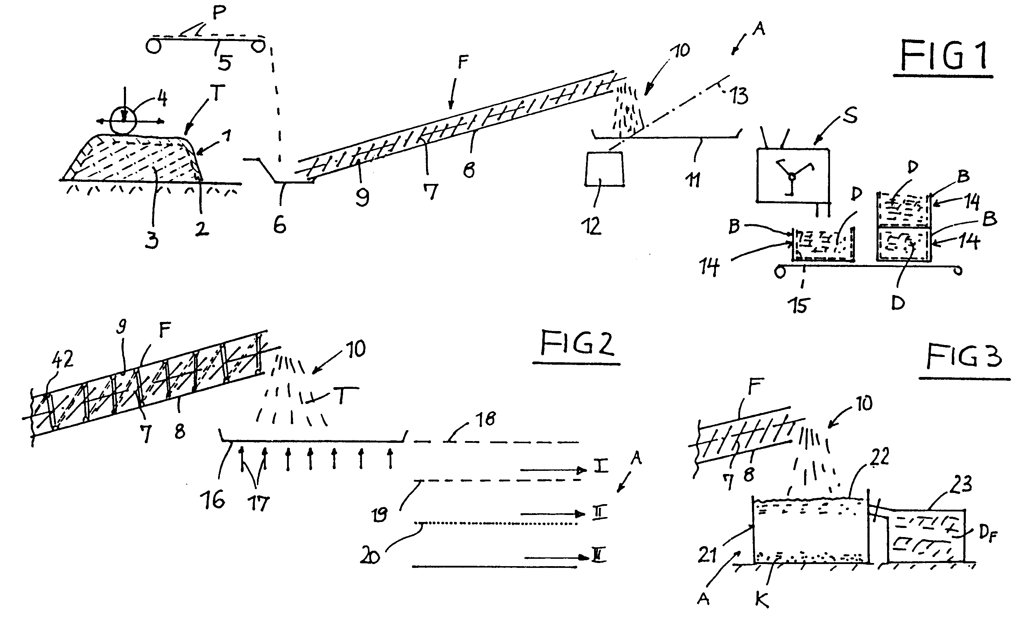

Gemäß Figur 1 ist eine größere Menge Traubentrester T in einer Miete 1 über ca. 1 Jahr gelagert worden. In einer ca. 40 cm tiefen Oberflächenschicht 2 hat dabei eine aerobe Verrottung stattgefunden. Die Oberflächenschicht 2 liegt wie eine Schale um einen Kernbereich 3 der Miete 1. Im Kernbereich 3 hat nur eine anaerobe Verrottung stattgefunden. Um die anaerobe Verrottung zu fördern (niedrige Temperaturen bis ca. 40°C) wurde die Miete 1 mit einer Walze oder Presse 4 mehrfach gepreßt, damit Luft und Milchsäure aus dem Kernbereich 3 ausgetrieben sind und störende Gerüche nur kurzzeitig auftreten konnten. Der Traubentrester T wird dann in einen Behälter 6 chargenweise eingefüllt. Dabei kann mit einer Fördervorrichtung 5 Papierschlamm P zugesetzt werden.

Aus dem Behälter 6 erstreckt sich eine Schneckenförderstrecke F zu einer Freifall-Mischvorrichtung 10. Die Schneckenförderstrecke F steigt an und enthält einen zweckmäßig rohrförmigen Förder- und Bearbeitungs-Kanal 8, in der eine Förder- und Bearbeitungs-Schnecke 7 drehbar angeordnet ist. Der Antrieb der Schnecke 7 ist konventionell und nicht gezeigt. Die Schneckenwindungen sind so ausgelegt, daß sie nicht unmittelbar an die Rohrwandung anstoßen, sondern etwas Abstand halten. Das zu fördernde Material wird von der Schnecke aufwärtsgedrückt durch das nachdrängende Material. Die Wandung des Kanals 8 bremst die Fördergeschwindigkeit, so daß hierdurch der Traubentrester T intensiv aufgearbeitet, aufbereitet, gelockert, gemischt und homogenisiert wird. Die Schnecke 7 ist in den Kanal 8 derart eingepaßt, daß sich wirksame Scher- und Walk-Spalte ergeben, in denen die Kerne K aus dem Traubentrester T herausgelöst und teilweise auch schon an ihren harten Oberflächen verletzt werden. Die Aufarbeitung des Traubentresters T wird noch intensiver, wenn die Kanalinnenwand 9 mit einer steigenden Drallspur 42 belegt ist, die der Schneckenwindung annähernd entspricht.

In der Freifall-Mischvorrichtung 10 wird die homogenisierte und aufbereitete Masse nochmals gelockert und intensiv vermischt. Am Ende der Schneckenförderstrecke F ist eine Sammelfläche 11 vorgesehen, auf der das homogenisierte Material gesammelt wird. Ggf. ist hier eine Siebvorrichtung 13 vorgesehen, mit der der Kernanteil abgesondert werden kann. Zum Aussondern der Kerne kann auch eine Aussonderungseinrichtung 12 vorgesehen sein, z.B. eine Blasvorrichtung, die die leichteren Bestandteile wegbläst, so daß die schwereren Kerne K übrigbleiben. Denkbar ist es auch, hier einen Ausschwemmer anzuordnen, der die spezifisch schwereren Kerne aussondert und die leichteren Bestandteile wegschwemmt.

Alternativ kann auf der Sammelfläche 11 auch die gesamte homogenisierte Masse gesammelt werden, die dann einem Zerkleinerer S zugeführt. wird. Der Zerkleinerer S kann ein Klutenbrecher oder eine Hammermühle sein. In einem Zerkleinerer S oder Klutenbrecher werden die größeren Teile zerschlagen und die Masse total homogenisiert. Auch die Kerne K werden für eine schnelle nachfolgende aerobe Rottung entsprechend aufbereitet. In einer Hammermühle wird das gesamte Material zerschrotet, wobei die Kerne und die größeren Kammteile in Kleinstteile zerrieben werden, was eine sehr rasche anschließende aerobe Rottung ermöglicht. Ferner wird erneut homogenisiert. Die so erhaltene Masse wird in Behältern B zum Rotten gesammelt, wobei relativ kurze Nachrottzeiten ausreichen, um einen hochwertigen Dünger D entstehen zu lassen. Die Behälter B haben grobmaschige Gitterwände 14 und eine innenseitige Auskleidung aus Jute oder gelöcherte Pappe 15.

Bei einer weiteren Verfahrensvariante wird gemäß Figur 2 relativ frischer Traubentrester T der Schneckenförderung durch die Schneckenförderstrecke F unterworfen. Auch hierbei findet eine weitgehende Trennung der einzelnen Bestandteile und eine Aufbereitung durch mechanisches Scheren und Walken statt. In der Freifall-Mischvorrichtung 10 wird die aufbereitete Masse gelockert, gemischt und homogenisiert, ehe sie auf einer Fläche 16 gesammelt und - wie durch Pfeile 17 angedeutet - getrocknet wird. Die Trocknung erfolgt mit Luft oder auch in einer Trommel mit Warmluft oder in einem Flächentrockner bzw. Durchlauftrockner. Nachfolgend wird die getrocknete Masse über Siebböden 18, 19, 20 mit unterschiedlichen Maschenweiten gefördert, so daß Fraktionen I, II und III entstehen, die Grobteile (Fraktion I), Kernteile (Fraktion II) und Feinteile (Fraktion III) enthalten. Die Kernfraktion II kann ausgesondert und zur Ölgewinnung benutzt werden. Es ist aber auch denkbar, die Kernfraktion selbständig aufzuarbeiten, zu mahlen oder zu zerkleinern und dann den beiden anderen Fraktionen wieder zuzuführen. Das gewonnene Endprodukt ist ein Bodenverbesserer, der auch vollständig im Boden rottet und so die wertvollen Düngersubstanzen einbringt.

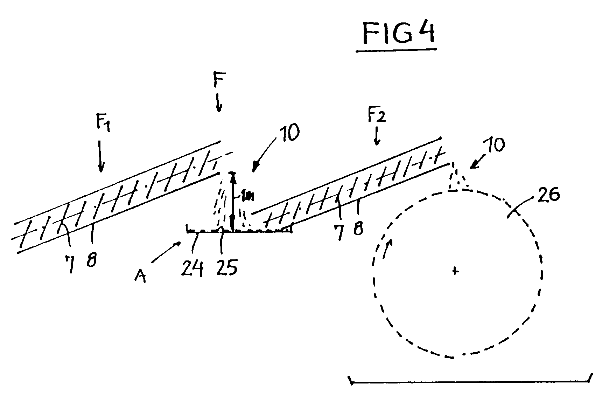

Bei der Ausführungsform gemäß Figur 3 ist hinter der Schneckenförderstrecke F und der Freifall-Mischvorrichtung 10 ein Behälter 21 mit Wasser 22 vorgesehen, um die Kerne K dank ihres höheren spezifischen Gewichtes auszusondern. Die restlichen, im Wasser schwimmenden, Bestandteile werden in Container 23 abgefüllt, in denen diese Biomasse mit weiterer Flüssigkeit angesetzt und zu einem Flüssigdünger DF umgewandelt wird. Die Kerne K können entweder der Ölgewinnung zugeführt oder für sich weiter bearbeitet und zu Dünger umgewandelt werden.

Bei der Ausführungsform gemäß Figur 4 ist die Schneckenförderstrecke F in mehrere Sektionen F₁ und F₂ aufgeteilt, zwischen denen mindestens eine Freifall-Mischvorrichtung 10 vorgesehen ist. Die Freifallhöhe beträgt mindestens 1 m. In einem Sammelbehälter 24 der Freifall-Mischvorrichtung 10 kann ein Siebboden 25 vorgesehen sein, um weitgehend die Kerne auszusondern. Am Ende der Schneckenförderstrecke F ist eine Trenntrommel 26, beispielsweise eine Siebtrommel, vorgesehen, mit der die aufbereitete Masse in Fraktionen geteilt wird. Zudem wird vorher getrocknet (nicht dargestellt), um die Trockensubstanz auf eine Restfeuchte von ca. 15 % zu bringen und lagerfähig zu machen. Die bei der Verarbeitung von frischem Traubentrester in diesem Bereich der Vorrichtung vorliegende Restfeuchte von 40 % und mehr ließe keine störungsfreie Lagerung zu.

Papierschlamm P kann sowohl für bereits abgelagerten als auch für frischen Traubentrester T benutzt werden, um den PH-Wert der Masse weitgehend zu neutralisieren. Bei der Rottung, insbesondere bei der Nachrottung, bei der noch Temperaturen bis zu 70°C entstehen können, kann die anfallende Wärme zur Beheizung von Gewächshäusern oder Ställen benutzt werden. Das bei der Rottung entstehende CO₂ kann in Gewächshäusern benutzt werden, um den Pflanzenwuchs zu fördern. Allerdings ist es zweckmäßig, die Masse bei der Nachrottung gut zu belüften, weil mit steigendem CO₂-Gehalt in der Masse die Rottung zurückgeht. Das CO₂ wird aber auch schon im Verlauf der Schneckenförderung, bei der Freifall-Mischung und den Umschicht- und Abfüllvorgängen ausgetrieben, so daß die Nachrottung zügig und wirkungsvoll abläuft und zu einem hervorragenden Dünger führt.

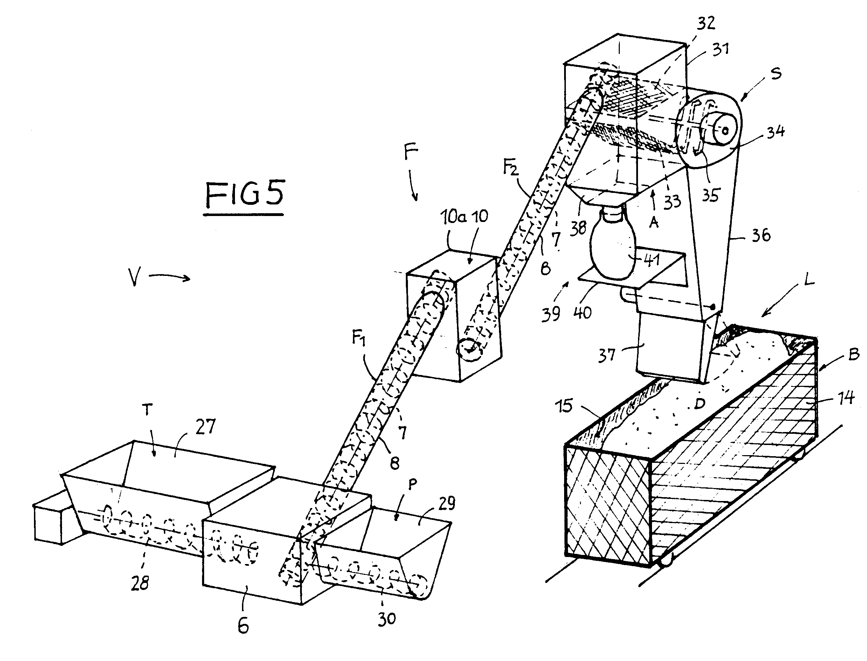

In Figur 5 ist eine komplette Vorrichtung V zum Verarbeiten von Traubentrester T (und ggf. Papierschlamm P) gezeigt, die eine industrielle Produktion ermöglicht. Kern der Vorrichtung ist die Schneckenförderstrecke F, die aus zwei versetzt hintereinander und über die Freifall-Mischvorrichtung 10 miteinander verbundenen Sektionen F₁ und F₂ besteht, die noch eine weitere Freifall-Mischvorrichtung aufweisen kann. Die Freifall-Mischvorrichtung 10 wird durch eine Kammer 10a gebildet, in die die erste Sektion F₁ oben einmündet, wogegen die zweite Sektion F₂ unten in die Kammer 10a einmündet. Auf diese Weise wird Bauhöhe gespart und der wünschenswerte Effekt einer Durchmischung, Lockerung und Belüftung des Traubentresters beim Herabfallen zur Aufnahmeseite der zweiten Sektion F₂ erreicht. Die erste Sektion F₁ beginnt im Bodenbereich des Behälters 6, an den seitlich ein Schütt-Trog 27 mit einem Zuförderer 28, zweckmäßigerweise einer Förderschnecke, angebaut ist. An der anderen Seite des Behälters 6 kann ein weiterer Schütt-Trog 29 mit einem Zuförderer 30, zweckmäßigerweise einer weiteren Förderschnecke, angebaut sein, um größere Mengen zuführen zu können oder auch gleichzeitig Papierschlamm P verarbeiten zu können.

Die zweite Sektion F₂ mündet abgabeseitig in einem hochgesetzten Gehäuse 31, in dem unterhalb der Abgabeseite der zweiten Sektion F₂ ein oberer Siebboden 32 und ein unterer, schräggesetzter Siebboden 33 angeordnet sind. Der untere Siebboden 33 ist zweckmäßigerweise mit einer Maschenweite ausgebildet, bei der nur die losgelösten Kerne K durchfallen, hingegen die restlichen Bestandteile schräg nach unten in das Gehäuse 34 mit dem integrierten Zerkleinerer S fallen. Von dem Gehäuse 34 erstreckt sich nach unten ein sich verjüngender Fallschacht 36, an dessen unterem Ende ein Pendelmundstück 37 angesetzt ist, das sich durch einen nicht näher hervorgehobenen Antrieb hin- und herbewegen läßt, um die nach unten fallenden Bestandteile zügig in dem Behälter B zu verteilen, der in der unterhalb des Fallschachtes 36 gebildeten Füllstation L steht. Der Behälter B ist länglich quaderförmig und oben offen und besitzt grobmaschige Seitenwände 14 und eine innenseitige luftdurchlässige Wandauskleidung 15.

Unterhalb des Siebbodens 33 ist im Gehäuse 31 ein Sammeltrichter 38 für die durchfallenden Kerne vorgesehen, der mit einer Absackstation 39 in Verbindung steht. Dort kann auf einer Plattform 40 ein Sack 41 zum Abfüllen der ausgesonderten Kerne angesetzt werden.

Der Behälter B ist stapelfähig, so daß mehrere solcher Behälter zur Nachrottung aufeinandergesetzt werden können. Ferner besitzt er entweder Räder zum Verfahren oder er wird auf einem verfahrbaren Wagen aufgesetzt. Die Schüttröge 27 und 29 werden zweckmäßigerweise mit Loren oder mit Schaufelladern beschickt.

## Patentansprüche

1. Verfahren zur Herstellung eines Düngemittels aus Traubentrester, bei dem der Traubentrester einer Rottung und wenigstens einmal einer Schneckenförderung unterworfen wird, dadurch gekennzeichnet, daß der Traubentrester bei einer schräg aufwärts gerichteten Schneckenförderung durch Scheren und Walken mechanisch aufbereitet und weitgehend in seine Einzelteile, d.h. Kämme, Kerne, Häute, aufgelöst und intensiv gemischt wird.

2. Verfahren nach Anspruch 1, gekennzeichnet durch folgende Schritte:
der Trester wird ca. 1 Jahr lang zur anaeroben Rottung in Form einer Miete gelagert,
während der Lagerung wird zum Fördern der anaeroben Rottung im Inneren der Miete wenigstens einmal Luft und Milchsäure durch Walzen oder Pressen ausgetrieben,
nach der Rottung wird der Traubentrester durch die Schneckenförderung einer Scher- und Walkbehandlung unterworfen und
nach der Schneckenförderung wird der Trester mechanisch zerkleinert und ggf. einer aeroben Nachverrottung unterworfen.

3. Verfahren nach den Ansprüchen 1 und/oder 2, dadurch gekennzeichnet, daß der Traubentrester nach der Schneckenförderung dem freien Fall unterworfen wird.

4. Verfahren nach wenigstens einem der Ansprüche 1 bis 3, dadurch gekennzeichnet, daß bei der Schneckenförderung losgelöste Kerne durch Sieben, Blasen oder Ausschwemmen mit Wasser abgesondert und zur Ölgewinnung weiterverarbeitet werden.

5. Verfahren nach Anspruch 1, gekennzeichnet durch folgende Schritte:
der Traubentrester wird in frischem Zustand der Schneckenförderung unterworfen und anschließend mechanisch in drei Fraktionen, nämlich Feinteile, Grobteile und Kerne, getrennt,

6. Verfahren nach Anspruch 5, dadurch gekennzeichnet, daß die Kernfraktion durch Ausschwemmen mit Wasser abgetrennt wird, und daß die verbleibende flüssige Masse aus den beiden anderen Fraktionen in Containern mit zusätzlicher Flüssigkeit zu Flüssigdünger umgewandelt wird.

7. Verfahren nach wenigstens einem der Ansprüche 1 bis 5, dadurch gekennzeichnet, daß der mechanisch bearbeitete Traubentrester mit gequetschten oder zerstoßenen Kernen in auf ca. 50° bis 60°C angewärmtem Wasser für 48 bis 84 Stunden gehalten und anschließend das Wasser über einen Filter als Flüssigdünger abgefüllt wird.

8. Verfahren nach den Ansprüchen 1 bis 7, dadurch gekennzeichnet, daß dem Traubentrester vor der Schneckenförderung Papierschlamm und/oder organische Abfallstoffe zugesetzt wird bzw. werden.

9. Vorrichtung (V) zum Durchführen des Verfahrens nach Anspruch 1, wobei für den Traubentrester (T) wenigstens eine Schneckenförderstrecke (F) vorgesehen ist, die eine in einem Förderkanal angeordnete Förderschnecke aufweist, dadurch gekennzeichnet, daß die Förderschnecke (7) unter Bildung von Scher- und Walkspalten zum mechanischen Bearbeiten des Traubentresters beim Fördern In den Förderkanal (8) eingepaßt ist.

10. Vorrichtung nach Anspruch 9 , dadurch gekennzeichnet, daß die Schneckenförderstrecke (F) in Förderrichtung schräg ansteigt.

11. Vorrichtung nach Anspruch 9 oder 10, dadurch gekennzeichnet, daß die Schneckenförderstrecke (F) mehrere aufeinanderfolgende Sektionen (F₁, F₂) aufweist, und daß zwischen mindestens zwei Sektionen (F₁, F₂) eine freie Freifallstrecke (10) vorgesehen ist.

12. Vorrichtung nach mindestens einem der Ansprüche 9 bis 11, dadurch gekennzeichnet, daß die Innenwandung (9) des Förderkanals (8) mit einer Drallspur (42) versehen ist.

13. Vorrichtung nach Anspruch 10, dadurch gekennzeichnet, daß in der Freifallstrecke (10) eine Kernaussonderungseinrichtung (A) mit einem Sieb (11, 13), einer Blasvorrichtung (12) und/oder einer Ausschwemmvorrichtung (21) vorgesehen ist.

14. Vorrichtung nach mindestens einem der Ansprüche 9 bis 13, dadurch gekennzeichnet, daß am Ende der Schneckenförderstrecke (F) ein Zerkleinerer (S) vorgesehen ist.

15. Vorrichtung nach Anspruch 9, dadurch gekennzeichnet, daß am Ende der Schneckenförderstrecke (F) eine Siebtrommel (26) oder eine Siebvorrichtung (18, 19, 20; 32, 33) angeordnet ist, mit der aus dem Traubentrester (T) Fraktionen (I, II, III), d.h. Feinteile, Grobteile und Kerne, bildbar sind.

16. Vorrichtung nach Anspruch 15, dadurch gekennzeichnet, daß vor der Siebtrommel (26) eine Trocknungsvorrichtung (17) vorgesehen ist,

17. Vorrichtung nach mindestens einem der Ansprüche 9 bis 16, dadurch gekennzeichnet, daß an einem Behälter (6) seitlich mindestens ein Schütttrog (27, 29) vorgesehen ist, in dem zum Behälter (6) ein Zuförderer (28, 30) für den Traubentrester (T) verläuft, daß am Boden des Behälters (6) eine erste Förderstreckensektion (F₁) zu einer Kammer (10a) als Freifallstrecke (10) führt, in die die erste Förderstreckensektion (F₁) abgabeseitig oben und die weiterfördernde zweite Förderstreckensektion (F₂) aufnahmeseitig unten einmünden, daß die zweite Förderstreckensektion (F₂) abgabeseitig in einem hochgesetzten Gehäuse (31) mündet, in dem vor dem Zerkleinerer (S) Siebböden (32, 33) angeordnet sind, und daß unterhalb des Zerkleinerers (S) eine Füllstation (L) für die Sammelbehälter (B) vorgesehen ist.

## Claims

1. A method for producing a fertilizer from rape, wherein the rape is subjected to rotting and at least once to a screw conveyance, characterized in that the rape is mechanically processed by shearing and milling during an inclined upwardly directed screw conveyance, and is extensively broken down into its individual parts, that is to say, stalks, pips, skins and is intensively mixed.

2. A method according to claim 1, characterized by the following steps:
the rape is subjected for approximately one year to anaerobic rotting in the form of a stack,
during the storage, air and lactic acid are expelled at least once by rolling or pressing, in order to promote the anaerobic rotting,
after the rotting, the rape is subjected to a shearing and milling treatment by means of the screw conveyance, and after the screw conveyance the rape is mechanically comminuted and, if required, subjected to a subsequent aerobic rotting.

3. A method according to claims 1 and/or 2, characterized in that the rape is subjected to a free fall after the screw conveyance.

4. A method according to at least one of claims 1 to 3, characterized in that pips detached during the screw conveyance are segregated by sieving, blowing or flushing with water, and are further processed to produce oil.

5. A method according to claim 1, characterized by the following steps:
the rape is subjected to the screw conveyance in its fresh state and is subsequently separated mechanically into three fractions, that is to say, fine particles, coarse particles and pips.

6. A method according to claim 5, characterized in that the pip fraction is separated out by flushing with water; and that the remaining liquid mass of the two other fractions is converted in containers into a liquid fertilizer by means of an additional liquid.

7. A method according to at least one of claims 1 to 5, characterized in that the mechanically processed rape with the squashed or crushed pips is kept in water heated to approximately 50° to 60°C for 48 to 84 hours and is subsequently drawn off as a liquid fertilizer via a filter.

8. A method according to claims 1 to 7, characterized in that a paper slurry and/or organic waste substances is or are added to the rape before the screw conveyance.

9. An apparatus (V) for operating the method according to claim 1, wherein at least one screw conveyance path (F) is provided for the rape (T), which path has a screw conveyor arranged in a conveyance duct, characterized in that the screw conveyor (7) is fitted into the conveyance duct (8), while leaving shearing and milling gaps for the mechanical processing of the rape during the conveyance.

10. An apparatus according to claim 9, characterized in that the screw conveyance path (F) obliquely rises in the conveyance direction.

11. An apparatus according to claim 9 or 10, characterized in that the screw conveyance path (F) has several sections (F₁, F₂) following one another; and that between at least two sections (F₁, F₂), there is provided a free fall stretch (10).

12. An apparatus according to at least one of claims 9 to 11, characterized in that the inner wall (9) of the conveyance duct (8) is provided with a helical track.

13. An apparatus according to claim 10, characterized in that in the free fall stretch (10), there is provided a pip segregating device (A) with a sieve (11, 13), a blowing device (12) and/or a flushing device (21).

14. An apparatus according to at least one of claims 9 to 13, characterized in that a comminutor (S) is provided at the end of the screw conveyance path (F).

15. An apparatus according to claim 9, characterized in that at the end of the screw conveyance path (F), there is arranged a sieve drum (26) or a sieving device (18, 19, 20; 32, 33), whereby fractions (I, II, III), that is to say fine particles, coarse particles and pips can be formed from the rape (T).

16. A device according to claim 15, characterized in that a drying device (17) is provided ahead of the sieve drum (26).

17. An apparatus according to at least one of claims 9 to 16, characterized in that on a container (6), there is laterally provided at least one receiving vat (27, 29), wherein a feeder (28, 30) for the rape (T) extends to the container (6); that at the bottom of the container (6), a first conveyance path section (F₁) leads to a chamber (10a) as a free fall stretch (10), into which there issue the first conveyance path section (F₁) on the delivery side at the top, and the second conveyance path section (F₂) for the on-carriage on the receiving side at the bottom; that the second conveyance path section (F₂) opens out on the delivery side in a casing (31) placed in a high position, in which casing there are arranged sieve bottoms (32, 33) ahead of the comminutor (S); and that a filling station (L) for the collecting container (B) is provided beneath the comminutor (S).

## Revendications

1. Procédé de fabrication d'engrais à partir de marc de raisin, dans lequel on soumet le marc de raisin à une fermentation et au moins une fois à un transport par vis, caractérisé par le fait qu'on prépare le marc de raisin mécaniquement par cisaillement et foulage lors d'un transport par vis dirigé obliquement vers le haut et le décompose dans une large mesure en ses différentes parties, c'est-à-dire rafles, pépins, peaux, et le mélange de façon intense.

2. Procédé selon la revendication 1, caractérisé par les étapes suivantes :
on stocke le marc de raisin pendant environ un an sous la forme d'une meule pour sa fermentation anaérobie,
pendant ce stockage, pour favoriser la fermentation anaérobie à l'intérieur de la meule, on chasse au moins une fois l'air et l'acide lactique par cylindrage ou pressage,
après la fermentation, on soumet le marc de raisin à un traitement de cisaillement et de foulage au moyen du transport par vis et
après le transport par vis, on broie le marc de raisin et éventuellement le soumet à une fermentation secondaire aérobie.

3. Procédé selon l'une des revendications 1 et 2 ou les deux, caractérisé par le fait qu'après le transport par vis, on soumet le marc de raisin à une chute libre.

4. Procédé selon au moins une des revendications 1 à 3, caractérisé par le fait qu'on sépare les pépins détachés lors du transport par vis par criblage, soufflage ou lavage par un courant d'eau et les traite pour la production d'huile.

5. Procédé selon la revendication 1, caractérisé par les étapes suivantes :
on soumet le marc de raisin à l'état frais au transport par vis et ensuite le divise en trois fractions, à savoir éléments fins, gros éléments et pépins.

6. Procédé selon la revendication 5, caractérisé par le fait qu'on sépare la fraction pépins par lavage par un courant d'eau, et qu'on transforme la matière liquide restante des deux autres fractions en engrais liquide dans des récipients avec du liquide supplémentaire.

7. Procédé selon au moins une des revendications 1 à 5, caractérisé par le fait qu'on maintient le marc de raisin travaillé mécaniquement à pépins écrasés ou broyés pendant 48 à 84 heures dans de l'eau chauffée à environ 50 à 60 °C et ensuite met l'eau en récipients comme engrais liquide en la faisant passer à travers un filtre.

8. Procédé selon les revendications 1 à 7, caractérisé par le fait qu'avant le transport par vis, on ajoute au marc de raisin de la boue de papier et/ou des déchets organiques.

9. Dispositif (V) pour la mise en oeuvre du procédé de la revendication 1, dans lequel est prévu pour le marc de raisin (T) au moins un transporteur à vis (F) qui présente une vis transporteuse placée dans un canal de transport, caractérisé par le fait que la vis transporteuse (7) est ajustée dans le canal de transport (8) avec formation d'interstices de cisaillement et de foulage pour le travail mécanique du marc de raison pendant son transport.

10. Dispositif selon la revendication 9, caractérisé par le fait que le transporteur à vis (F) monte obliquement dans la direction de transport.

11. Dispositif selon l'une des revendications 9 et 10, caractérisé par le fait que le transporteur à vis (F) présente plusieurs tronçons se faisant suite (F₁, F₂), et qu'entre au moins deux tronçons (F₁, F₂) est prévu un trajet de chute libre (10).

12. Dispositif selon au moins une des revendications 9 à 11, caractérisé par le fait que la paroi intérieure (9) du canal de transport (8) est pourvue d'un piste hélicoïdale (42).

13. Dispositif selon la revendication 10, caractérisé par le fait que dans le trajet de chute libre (10) est prévu un dispositif de séparation des pépins (A) comportant un crible (11, 13), un dispositif de soufflage (12) et/ou un dispositif de lavage par courant d'eau (21).

14. Dispositif selon au moins une des revendications 9 à 13, caractérisé par le fait qu'à l'extrémité du transporteur à vis (F) est prévu un broyeur (S).

15. Dispositif selon la revendication 9, caractérisé par le fait qu'à l'extrémité du transporteur à vis (F) est placé un tambour cribleur (26) ou un dispositif de criblage (18, 19, 20 ; 32, 33) qui permet de former à partir du marc de raisin (T) des fractions (I, II, III), à savoir éléments fins, gros éléments et pépins.

16. Dispositif selon la revendication 15, caractérisé par le fait qu'avant le tambour cribleur (26) est prévu un dispositif de séchage (17).

17. Dispositif selon au moins une des revendications 9 à 16, caractérisé par le fait que sur un récipient (6) est prévue sur le côté au moins une auge de déversement (27, 29) dans laquelle est monté un transporteur (28, 30) d'alimentation en marc de raison (T) menant au récipient (6), que du fond du récipient (6) part un premier tronçon de transport (F₁) qui va à une chambre (10a) formant le trajet de chute libre (10) dans laquelle le premier tronçon de transport (F₁) débouche côté sortie en haut et le deuxième tronçon de transport (F₂), faisant suite au premier, débouche côté entrée en bas, que le deuxième tronçon de transport (F₂) débouche côté sortie dans une boîte située en hauteur (31) dans laquelle des surfaces de criblage (32, 33) sont placées avant le broyeur (s), et qu'au-dessous du broyeur (S) est prévu un poste de remplissage (L) pour le remplissage des récipients collecteurs (B).
